(19) Europäisches Patentamt
European Patent Office
Office européen des brevets

(11) **EP 3 569 646 A1**

(12) **EUROPÄISCHE PATENTANMELDUNG**

(43) Veröffentlichungstag:
**20.11.2019 Patentblatt 2019/47**

(51) Int Cl.:
***C08J 7/04*** *(2006.01)*     ***B32B 27/36*** *(2006.01)*

(21) Anmeldenummer: **19172925.0**

(22) Anmeldetag: **07.05.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **14.05.2018   DE 102018207429**

(71) Anmelder: **Mitsubishi Polyester Film GmbH**
**65203 Wiesbaden (DE)**

(72) Erfinder:
• **Klein, Dagmar**
**55437 Ockenheim (DE)**

• **Konrad, Matthias**
**65830 Kriftel (DE)**
• **Kliesch, Holger**
**65462 Ginsheim (DE)**
• **Michalski, Artur**
**55435 Gau-Algesheim (DE)**
• **Fischer, Viktor**
**68723 Oftersheim (DE)**

(74) Vertreter: **Schweitzer, Klaus**
**Plate Schweitzer Zounek**
**Patentanwälte**
**Rheingaustrasse 196**
**65203 Wiesbaden (DE)**

(54) **MATTE, BIAXIAL ORIENTIERTE POLYESTERFOLIE MIT ERHÖHTEM REIBUNGSKOEFFIZIENT**

(57)    Die vorliegende Erfindung betrifft eine mindestens zweischichtige, biaxial orientierte Polyesterfolie mit mindestens einer matten Oberfläche und einem erhöhten Reibungskoeffizienten dieser Oberfläche mit einer Gesamtdicke von 8 - 75 µm und die matte Oberfläche mit einer Polyurethan-basierten Beschichtung beschichtet ist. Die erfindungsgemäße Folie eignet sich hervorragend für die Verwendung als Außenlage von Tierfutterbeuteln mit matter Optik, die beim Stapeln nicht gegeneinander verrutschen.

EP 3 569 646 A1

## Beschreibung

Biaxial orientierte, mindestens zweischichtige Polyesterfolie mit mindestens einer matten Seite und einem erhöhten Reibungskoeffizienten der matten Seite sowie Verfahren zu ihrer Herstellung und ihre Verwendung in der Verpackung beispielsweise für Tierfutterbeutel.

## Gebiet der Erfindung

Die vorliegende Erfindung betrifft eine mindestens zweischichtige, biaxial orientierte Polyesterfolie mit mindestens einer matten Oberfläche und einem erhöhten Reibungskoeffizienten dieser Oberfläche mit einer Gesamtdicke von 8 - 75 μm. Die erfindungsgemäße Folie eignet sich hervorragend für die Verwendung als Außenlage von Tierfutterbeuteln mit matter Optik, die beim Stapeln nicht gegeneinander verrutschen.

## Beschreibung

Für viele Verpackungsanwendungen werden transparente Folien mit einer matten Optik in der Außenlage des Verpackungsverbundes aus Designgründen eingesetzt. Die gefüllten Verpackungen müssen stapelbar sein und dürfen beim Transport nicht verrutschen. Dies gilt auch für Beutelverpackungen, insbesondere zum Beispiel für große Tierfutterbeutel. Aus diesem Grund muss die Außenseite des Verpackungsverbundes einen erhöhten Reibungskoeffizienten besitzen. Außerdem muss der Beutel eine mechanische Festigkeit besitzen, die der Belastung durch das Füllgut standhalten kann, ohne dass die Verpackung verformt wird und der gesamte Verpackungsaufbau muss kosteneffizient in seinem Design und der Herstellbarkeit sein. Weiterhin muss die Folie gut bedruckbar sein und das Farberscheinungsbild muss klar und deutlich sein.

## Stand der Technik

Folien mit matter Oberfläche und einem erhöhten Reibungskoeffizienten sind im Stand der Technik bekannt. So beschreibt zum Beispiel EP0678378 eine mehrschichtige Polyethylenfolie mit einem Glanz von nicht größer als 50 und einem statischen Reibungskoeffizienten von nicht kleiner als 0,5 und einem dynamischen Reibungskoeffizienten von nicht größer als 0,5. Die Verwendung von Polyethylenfolien führt jedoch zu einer geringeren mechanischen Belastbarkeit der Verpackung wodurch eine zusätzliche Lage bestehend aus einer Polyesterfolie im Inneren des Verpackungsverbundes erforderlich ist, um einen ausreichend stabilen Tierfutterbeutel herstellen zu können. Zudem ist die Temperaturstabilität von PE Folien gering, was beispielsweise die maximale Temperatur beim Siegeln durch eine solche Folie auf etwa 100°C begrenzt. Verwendet man höhere Temperaturen, so würde diese Folie bei einer Verwendung als matte Außenlage in einem Beutel, beim Siegeln mit der Siegelbacke verkleben und beispielsweise wenn in einer Falz überlappend gesiegelt wird auch mit sich selbst siegeln was unerwünscht ist. Je niedriger die maximale Kontakttemperatur beispielsweise einer Siegelbacke mit der Folienoberfläche ist, desto länger muss ein Siegelzyklus werden, um das Siegelmaterial im Inneren des Beutels noch ausreichend zu erwärmen damit es wunschgemäß siegelt. Dies führt zu einer deutlich geringeren Profitabilität in der Beutelherstellung.

EP 1442875 beschreibt eine Polyesterfolie mit matter Oberfläche. Polyesterfolien mit matter Oberfläche besitzen aber aufgrund der verwendeten Partikel ein gutes Gleitverhalten, d.h. einen niedrigen Reibungskoeffizienten. Die Kombination einer matten Folienoberfläche und einem hohen Reibungskoeffizienten stellt somit einen Widerspruch dar. Daher ist eine Folie, wie sie in EP 1442875 beschrieben ist, für die Verwendung als Außenlage für einen Beutel mit guter Stapelbarkeit und geringer Rutschneigung nicht geeignet.

EP 0903221 beschreibt eine Polyesterfolie mit guten optischen Eigenschaften, guter Prozessierbarkeit und guter Sauerstoffbarriere nach Beschichtung mit einem metallischen oder oxidischen Material. Diese Eigenschaften werden durch die Verwendung eines Partikelsystems, welches eine definierte Anzahl an Erhebungen in einer definierten Höhe und Durchmesser auf der zu beschichtenden Seite erzeugt, erreicht. Solche Folien besitzen ebenfalls einen erhöhten Reibungskoeffizienten, allerdings bedingt der erfindungsgemäße Folienaufbau einen hohen Glanz der Folie, welcher für die hier beschriebe Anwendung nicht geeignet ist.

## Aufgabe

Die Aufgabe der vorliegenden Erfindung war es daher, eine mindestens einseitig matte Polyesterfolie mit einem erhöhten Reibungskoeffizienten (COF) der matten Seite und einer ausreichenden mechanischen Festigkeit bereitzustellen. Die Folie soll zudem Kontakttemperaturen von 180°C für mindestens 1 Sekunde aushalten, ohne mit einer Siegelbacke aus Metall zu verkleben, bzw. ohne mit sich selbst zu versiegeln.

**Lösung der Aufgabe**

Gelöst wird die Aufgabe durch eine mindestens zweischichtige, biaxial orientierte Polyesterfolie, die auf mindestens einer Folienoberfläche mit einer Polyurethanbasierten Beschichtung ausgestattet ist, dadurch gekennzeichnet, dass

(a) die Gesamtfoliendicke 8 - 75 $\mu$m beträgt,

(b) eine Deckschicht (A) Partikel mit einem $d_{50}$ von 2,0 $\mu$m - 10 $\mu$m enthält, wobei diese Deckschicht (A) dann eine matte Deckschicht (A) ist,

(c) die Polyurethan-basierte Beschichtung das Trocknungsprodukt einer wässrigen Dispersion darstellt, wobei:

(i) die wässrige Beschichtungsdispersion auf die matte Deckschicht (A) aufgetragen wird,

(ii) die wässrige Beschichtungsdispersion sphärische Teilchen mit einer mittleren Teilchengröße von $\geq$ 0,6 $\mu$m enthält,

(iii) die Trockenschichtdicke der Beschichtung 20 nm - 250 nm beträgt.

Eine solche Polyesterfolie weist dann folgende Eigenschaften auf:

(a) einen Glanz bei 60° der beschichteten matten Deckschicht (A) von maximal 50 und minimal 10,

(b) einen Reibungskoeffizienten (COF) der beschichteten matten Deckschicht (A) von 0,4 - 1,6,

(c) eine Trübung von kleiner 60 %,

(d) eine Volumentrübung von kleiner 40 %,

(e) einen E-Modul von größer 3000 N/mm$^2$,

(f) einen F5-Wert von größer 80 N/mm$^2$ und

(g) die matte Folienseite auf Grund der matten Deckschicht (A) bei Kontakt mit sich selbst (matt auf matt) bis mindestens 180°C nicht siegelt.

Wird im Folgenden von zu geringen, zu niedrigen, zu hohen und/oder schlechten Werten gesprochen, so sind damit Werte gemeint, die außerhalb der entsprechenden erfindungsgemäßen Bereiche liegen. Wird im Folgenden von guten oder sehr guten Werten gesprochen, so werden darunter Werte verstanden, die sich innerhalb der erfindungsgemäßen, bzw. bevorzugten erfindungsgemäßen Bereiche befinden (sofern diese Werte quantifizierbar sind, bzw. im Rahmen der Beschreibung quantifiziert wurden).

Die Gesamtfoliendicke beträgt mind. 8 $\mu$m und maximal 75 $\mu$m. Bevorzugt liegt die Foliendicke bei mindestens 10 $\mu$m und maximal 30 $\mu$m und besonders bevorzugt bei mindestens 11 $\mu$m und maximal 23 $\mu$m. Liegt die Gesamtfoliendicke unter 8 $\mu$m, so reicht die Steifigkeit nicht aus, um eine ausreichende Formbeständigkeit der Verpackung zu gewährleisten, oberhalb von 75 $\mu$m werden keine weiteren Vorteile bezüglich Glanz, Reibungsverhalten und mechanischer Festigkeit erzielt und die Herstellung der Verpackung ist zu kostenintensiv.

In einer Ausführungsform ist die Folie dreischichtig aufgebaut und weist auf der einen Seite der Schicht (B) (=Basisschicht) die erfindungsgemäße, matte Deckschicht (A) und auf der anderen Seite der Schicht (B) eine weitere Deckschicht (C) auf. In diesem Fall bilden die beiden Schichten (A) und (C) die Deckschichten (A) und (C). Durch einen dreischichtigen Aufbau kann eine Folie mit einer geringen Trübung und guter Transparenz erhalten werden, indem die Schicht (B) keine weiteren Partikel außer denen, die durch Zugabe des Eigenregenrats (s.u.) eingebracht werden, enthält. Auf diese Weise kann der Anteil an rückgeführtem Regenerat erhöht werden, was zu einer besonders wirtschaftlichen Folienproduktion führt. Der Anteil der Basisschicht an der Gesamtfoliendicke beträgt mindestens 60 %, bevorzugt 70 % und besonders bevorzugt mindestens 75 %.

Vorteilhafterweise können Folien zum Schutze der Umwelt recycelt werden und bei der Folienherstellung eingesetzt oder in andere polyesterhaltige Produkte zurückgeführt werden. In einer Ausführungsform werden die Folienreste aufgearbeitet und können der Schicht (B) zugeführt werden (Eigenregenrat). Dabei kann der Anteil des zurückgeführten, recycelten Polyestermaterials so groß wie möglich sein, ohne die beschriebenen, erfindungsgemäßen Folieneigenschaften zu beeinträchtigen. Der Anteil an recyceltem Polyestermaterial kann von 0 - 60 Gew.%, bevorzugt 2 - 50 Gew.% und besonders bevorzugt 5 - 40 Gew.% bezogen auf das Gesamtgewicht der Folie betragen.

Die matte Deckschicht (A) hat mindestens eine Dicke von 0,7 $\mu$m und maximal 2,0 $\mu$m, bevorzugt mindestens 0,8 $\mu$m und maximal 1,8 $\mu$m und besonders bevorzugt mindestens 0,9 und maximal 1,5 $\mu$m, wobei die matte Deckschicht (A) und die Deckschicht (C) gleich oder verschieden dick sein können. Werden die Deckschichten zu dick, werden die Anforderungen an die Trübung und das Farberscheinungsbild der Folie nicht mehr erreicht, ist die Deckschicht A dünner als 0,7 $\mu$m, so werden die erfindungsgemäßen Glanzwerte nicht erreicht. Als Maß für das Farberscheinungsbild werden die Volumentrübung und der subjektive Eindruck bei der Betrachtung des Druckbildes durch die Folie herangezogen.

In einer anderen Ausführungsform ist die Folie zweischichtig aufgebaut. In einem zweischichtigen Aufbau entspricht die nicht matte Deckschicht der Basisschicht (B) der dreischichtigen Ausführungsform und hat die gleichen Anforderungen an den Partikelgehalt und an den Anteil an der Gesamtfoliendicke. Die matte Deckschicht entspricht dabei der matten Deckschicht (A) der dreischichtigen Ausführungsform und ist (physikalisch und chemisch) analog zur matten Deckschicht (A) der dreischichtigen Ausführungsform aufgebaut.

Wenn im Weiteren die Deckschicht (A) erwähnt wird, bezieht sich die Bezeichnung sowohl auf die zweischichtige sowie die mehrschichtige Ausführungsform.

Die erfindungsgemäße Polyesterfolie ist auf der matten Deckschicht (A) mit einer Beschichtung ausgestattet, die aus wässriger Dispersion aufgetragen wird und sphärische Teilchen beinhaltet, die entweder selbststabilisiert sind, oder durch Zugabe eines oder mehrerer Tenside stabilisiert werden können. Dabei können die Tenside sowohl anionisch, kationisch oder nichtionisch sein, als auch durch Polymere-Schutzkolloide dargestellt werden. Geeignete Tenside sind, Natriumdodecylsulfat, Cetyltrimethylammoniumchlorid (CTML CL), Natrium und/oder Kaliumsalze von Fettsäuren, Alkylethoxylate (linear und verzweigt), Polyglycerin-Polyricinoleat, Polysorbate bzw. ethoxylierte Sorbitanfettsäureester (z.B. Polyoxyethylen(20)-sorbitan-monooleat) und Sorbitanfettsäureester (z.B. Sorbitanmonooleat), Polyethylenglycol (Mw=100 - 10000 g/mol), Polyole wie Polyetherpolyole (z.B. Polytetrahydrofuran), Polyalkylenglycolether und BlockCopolymere wie z.B. Poly(ethylenglycol)-block-poly(propylenglycol)-block-poly(ethylenglycol) (PEG-PPG-PEG). Besonders bevorzugt sind lineare ethoxylierte Alkohole (C10-C16). Erfindungsgemäß bestehen die Teilchen aus nichtionischen Polyurethanen, anionischen Polyurethanen oder Mischung daraus. Weiterhin können auch Copolymere aus anionischen und nichtionischen Polyurethanen eingesetzt werden. Die sphärischen Teilchen haben einen mittleren Teilchendurchmesser von $\geq$ 0,6 $\mu$m und bevorzugt $\geq$ 1,0 $\mu$m. Ist die Teilchengröße kleiner als 0,6 $\mu$m, so kann der gewünschte Glanz nicht eingestellt werden.

In einer bevorzugten Ausführungsform enthält die Polyurethan-Beschichtung

(1) sphärische Teilchen mit einer mittleren Teilchengröße von $\geq$ 0,6 $\mu$m, die mindestens ein anionisches Polyurethan enthalten, das durch die Reaktion mindestens eines

(1a) anionischen Prepolymers mit einem 5 - 25 mval/100 g (=meq./100g) Trockenanteil von Carboxylgruppen mit mindestens einem

(1b) Kettenverlängerer, der aus Diaminsulfonatsalzen mit einer oder mehreren Sulfonsäuregruppen gewählt wurde,
gebildet wird.

Eine solche Dispersion wird beispielweise in EP 2321361 beschrieben und ist z.B. kommerziell von der Firma Lamberti S.p.A. als ESACOTE® PU900 erhältlich. Wird die Beschichtung in den erfindungsgemäßen Dicken auf die erfindungsgemäße Deckschicht (A) aufgetragen, so führt dies überraschenderweise zu einem verringerten Glanz der beschichteten Folienoberfläche und bewirkt einen gleichzeitigen Anstieg des Reibungskoeffizienten auch bei sehr geringen Beschichtungsdicken. Die Beschichtung auf der fertigen Folie weist eine Trockendicke von jeweils mindestens 20 nm bevorzugt mindestens 30 nm und insbesondere mindestens 50 nm auf und beträgt maximal 250 nm, bevorzugt maximal 200 nm und idealerweise maximal 150 nm. Hierdurch wird eine ideale Erhöhung des Reibungskoeffizienten der matten Seite erreicht, ohne dass die Verarbeitbarkeit der Folie auf den schnell laufenden Verpackungsmaschinen negativ beeinträchtigt wird (d.h. z.B. sie siegelt nicht mit sich selbst im angegebenen Dickenbereich). Liegt die Beschichtungsdicke unterhalb von 20 nm kann die gewünschten Anhebung des Reibungskoeffizienten nicht erreicht werden; liegt die Beschichtungsdicke oberhalb von 250 nm, ist eine gute Verarbeitung während der Herstellung der Verpackungsbeutel nicht mehr gewährleistet. Die in EP 2321361 beschriebenen Polyurethandispersionen werden typischerweise eingesetzt, um einen sogenannten soft-feel- (oder auch soft-touch) Effekt zu erzielen, der der mit der Beschichtung behandelten Oberfläche eine besonders weiche Haptik/Oberfläche verleiht. Werden jedoch solche Beschichtungen in den erfindungsgemäßen Dicken auf die erfindungsgemäße matte Deckschicht (A) aufgebracht, so führt dies überraschenderweise zu einer Erhöhung des Reibungskoeffizienten der ansonsten gut gleitenden matten Polyesterfolie (wenn sie nicht mit der erfindungsgemäßen PU-Beschichtung beschichtet wird).

Weiterhin kann die erfindungsgemäße Polyurethandispersion einen Vernetzer mit einem Anteil von ≤ 2,0 Gew.% bezogen auf den Feststoffgehalt der Dispersion enthalten. Geeignete Vernetzer sind dabei Oxazolin-basierte Vernetzer wie z.B. Epocros WS700 der Firma Sumitomo oder Silan-basierte Vernetzer wie Genosil GF56 der Firma Wacker Chemie AG. Durch die Zugabe des Vernetzers in den angegebenen Mengen wird die Abriebfestigkeit der Polyurethanbeschichtung verbessert, was sich besonders bei häufig transportierten bzw. verladenen Verpackungen und einer Langzeitlagerung als vorteilhaft erwiesen hat. Wird hingegen mehr als 2,0 Gew.% an Vernetzer zugegeben, so hat dies einen negativen Einfluss auf die Erhöhung des Reibungskoeffizienten. Die Zugabe von Vernetzer verringert zudem die Neigung mit sich selbst zu siegeln.

Um die erfindungsgemäße Polyesterfolie in Verpackungen zu verwenden, die dafür vorgesehen sind mit Lebensmitteln in Berührung zu kommen, hat es sich als günstig erwiesen, wenn die Beschichtungsdispersion und alle ggf. zugesetzten weiteren Komponenten (z.B. Vernetzer) in der Verordnung EU/10/2011 (Anhang I, Tabelle 1) aufgeführt sind. Dabei sollte die Beschichtung nach der Trocknung (und Thermofixierung) die in EU/10/2011 angeführten Migrationsgrenzen einhalten. Falls Stoffe und/oder Lösemittel enthalten sind, die nicht in EU/10/2011 (Anhang I, Tabelle 1) aufgeführt sind oder sehr kleine Migrationsgrenzen aufweisen, so hat es sich als günstig erwiesen, die Stoffe so einzusetzen, dass sie bei der Thermofixierung entweder abdampfen, zersetzen oder chemisch reagieren (z.B. vernetzen oder kovalent mit der Polyesteroberfläche und/oder dem Polymer der Beschichtung verbinden), so dass eine Migration (an der beschichteten Oberfläche) nicht messbar ist, bzw. unterhalb der Nachweisgrenze der entsprechenden Messmethode liegt (für nicht in EU/10/2011 angeführte Stoffe, die keine CMR-Stoffe darstellen, liegt der migrationsgrenzwert bei 10 ppb).

Die matte Deckschicht (A) enthält erfindungsgemäß Siliziumdioxidpartikel in einer Menge von 2 Gew.% bis 7 Gew.%, bevorzugt 2,5 Gew.% bis 6,5 Gew.% und besonders bevorzugt 3 Gew.% bis 6 Gew.% bezogen auf die Masse der Deckschicht A. Unterhalb von 2 Gew.% kann der erfindungsgemäße Glanzwert auch nach Aufbringen der Beschichtung nicht erreicht werden, oberhalb von 7 Gew.% wird die Folie zu trübe. Bevorzugt werden synthetisch hergestellte $SiO_2$-Partikel (in kolloidaler Form), wie sie in EP 1442875 beschrieben sind, verwendet. Diese Partikel werden sehr gut in die Polymermatrix eingebunden und erzeugen nur eine geringe Trübung. Die Partikel haben einen Durchmesser $d_{50}$ von 2,0 bis 10 μm, bevorzugt von 3,2 bis 9 μm und besonders bevorzugt von 3,4 bis 8 μm. Bei der Verwendung von Teilchen mit einem Durchmesser, der unterhalb 3,0 μm liegt, stellt sich (bei vergleichbaren Glanzwerten) eine erhöhte Trübung ein. Teilchen mit einem Durchmesser größer als 10 μm verursachen in der Regel Filterprobleme. Hersteller solcher Partikel sind z.B. die Firmen Grace (USA), Fuji (Japan), Degussa (Deutschland) oder Ineos (Großbritannien).

In einer Ausführungsform, bei der die Folie einen dreischichtigen Aufbau aufweist, enthält die auf der anderen Seite der Schicht (B) liegende Deckschicht (C) ebenfalls Partikel, um ein gutes Wickelverhalten der Folie zu gewährleisten. Dabei kann die Deckschicht (C) die gleichen Partikel wie die Deckschicht (A) enthalten. In einer bevorzugten Ausführungsform werden Partikel mit einem Durchmesser $d_{50}$ von 2,0 - 5 μm und einer Menge von 500 - 4000 ppm verwendet, weil dies zu einer geringeren Trübung der Folie führt.

Die Gesamtpartikelmenge, bezogen auf das Gesamtgewicht der Folie, liegt bei maximal 1,95 Gew.%, bevorzugt bei 1,8 Gew.% und besonders bevorzugt bei 1,65 Gew.%. Je höher der Gehalt an Partikel, desto größer ist die Trübung und die Volumentrübung und desto geringer ist die Transparenz der Folie, was eine negative Auswirkung auf das Farberscheinungsbild des Druckbildes der Verpackung erzeugt. Weißfärbende, jedoch mit dem Hauptbestandteil Polyester inkompatible Polymere, wie Polypropylen, COC's, Polyethylen, Polystyrol etc. und weißfärbende Partikel wie Titandioxid und Bariumsulfat sind in der Folie im Sinne der Erfindung zu weniger als 0,3 Gew.%, bevorzugt weniger als 0,1 Gew.% und besonders bevorzugt überhaupt nicht (zu 0 Gew.%) enthalten, da diese zu einer deutlichen Erhöhung der Trübung und Verringerung der Transparenz führen.

Die Folie kann neben dem erfindungsgemäßen Siliziumdioxid weitere Partikel, z.B.: Calciumcarbonat oder Aluminiumtrioxid enthalten, wobei der Gehalt solcher Partikel bevorzugt bei < 0,3 Gew.%, besonders bevorzugt bei < 0,25 Gew.% und insbesondere bei kleiner 0,01 Gew.% bezogen auf das Gesamtgewicht der Folie liegt. Andere Partikel außer dem bevorzugten Siliziumdioxid führen zu einer Verringerung der Transparenz und einer Erhöhung der Trübung ohne dass eine weitere Verringerung der Glanzwerte erreicht werden kann. Des Weiteren kann die Folie Partikel enthalten, die aus dem bei der Herstellung des Polyesters verwendeten Katalysators stammen, sowie anorganische Salze wie beispielsweise Magnesium- oder Zinksalze, die zur Einstellung der Schmelzeleitfähigkeit des Polymeren dienen.

Die Basisschicht (B) und die übrigen Schichten der Folie enthalten bevorzugt mindestens 80 Gew.% thermoplastischen Polyester, insbesondere mindestens 90 Gew.% thermoplastischen Polyester, bezogen auf das Gesamtgewicht der jeweiligen Schicht. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bishydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalat- oder 2,6-Naphthalat-Einheiten bestehen. Die restlichen Monomereinheiten stammen aus anderen aliphatischen, cycloaliphatischen oder aromatischen Dicarbonsäuren bzw. Diolen. In vorteilhafter Weise können für die Basisschicht (B) auch Copolymere und/oder Mischungen und/oder Blends aus den genannten Homo- und/oder Copolymeren verwendet werden (bei der Angabe der Mengen für die Dicarbonsäuren bildet die Gesamtmenge aller Dicarbonsäuren 100 Mol-%. Analog bildet die Gesamtmenge aller Diole auch 100 Mol-%.).

Geeignete andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure), Stilben-x,x'-dicarbonsäuren oder Furandicarbonsäure. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel $HO\text{-}(CH_2)_n\text{-}OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO\text{-}C_6H_4\text{-}X\text{-}C_6H_4\text{-}OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO\text{-}C_6H_4\text{-}C_6H_4\text{-}OH$ geeignet.

Besonders vorteilhaft ist es, wenn die Basisschicht (B) aus einem Copolyester aufgebaut ist, dessen Dicarbonsäure-Komponenten auf Terephthalsäure abgeleitete Einheiten und eine geringe Menge (< 5 Mol-%) an Isophthalsäure abgeleitete Einheiten zurückzuführen sind. In diesem Fall sind die Herstellbarkeit der Folie und die optischen Eigenschaften der Folie besonders gut. Die Basisschicht (B) enthält dann im Wesentlichen ein Polyestercopolymeres, das überwiegend aus Terephthalsäure und Isophthalsäure -Einheiten und aus Ethylenglykol-Einheiten (> 97 Mol-% an Dioleinheiten) zusammengesetzt ist.

In einer bevorzugten Ausführungsform enthält die matte Deckschicht (A) 4 bis 30 Mol-% Isophthalsäure (IPA), bevorzugt 6 bis 20 Mol-% Isophthalsäure und besonders bevorzugt 8 bis 12 Mol-% Isophthalsäure, bezogen auf die Gesamtsäuremenge des Polyesters in dieser Schicht. Dadurch wird die Volumentrübung der erfindungsgemäßen Folie deutlich reduziert. Dies ist für die Anwendungen von Vorteil, die auf der Seite der Deckschicht (C) bedruckt werden (z.B. Tierfutterbeutel) und ein klares Erscheinungsbild der Druckfarben durch die Folie hindurch aus Designgründen benötigt wird. Wird IPA mit einem Anteil von weniger als 4 Mol-% eingesetzt, so ist die Verringerung der Volumentrübung nicht signifikant. Je höher der IPA Anteil wird, desto größer wird die Neigung der matten Schicht bei Kontakt mit sich selbst zu siegeln. Wird das IPA mit einem Anteil von mehr als 30 Mol-% eingesetzt, hat dies einen negativen Effekt auf die Verarbeitungseigenschaften der Folie, weil die Deckschicht (A) anfällig für Verklebungen auf warmen Maschinenteilen wird.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid, Titanoxid oder Ester sowie Germanium-Verbindungen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als besonders vorteilhaft hat es sich erwiesen, wenn die Zwischenprodukte in Gegenwart von Titandioxid oder Germanium-Verbindungen polykondensiert werden, beziehungsweise die Direktveresterungsverfahren in Gegenwart von Polykondensationskatalysatoren wie Titandioxid oder Germanium-Verbindungen durchgeführt werden. Die erhaltene biaxial orientierte Polyesterfolie ist damit antimonfrei, zumindest aber antimonarm. Angestrebt wird im besonders bevorzugten Fall eine biaxial orientierte Polyesterfolie, die kein Antimon enthält und somit in Verpackungsanwendungen, bei denen die Folie in direktem Lebensmittelkontakt steht, eingesetzt werden kann.

Die erfindungsgemäße Folie hat einen Glanz gemessen unter 60° (Verfahren s. unter Messmethoden) der matten und beschichteten Deckschicht (A) von maximal 50 und minimal 10, bevorzugt maximal 45 und minimal 15 und besonders bevorzugt maximal 40 und minimal 20. Der beschriebene Glanz wird durch den Einsatz der erfindungsgemäßen Partikel und der aufgebrachten Beschichtung, sowie durch die geeigneten Polymere und das unten stehende Verfahren erreicht. Soll der Glanz der Folie geringer als 10 sein, so müsste entweder die Deckschicht deutlich mehr Partikel enthalten, was zu einer verschlechterten Trübung und einer zu geringen Transparenz der Folie führt, beziehungsweise die Beschichtung müsste dicker werden, was zu einer schlechteren Verarbeitung der Folie im Herstellungsprozess der Verpackung führt. Ein zu hoher Glanz entspricht nicht mehr den optischen Anforderungen an das gewünschte Design der Beutelverpackung, und die Verpackung wird als weniger hochwertig angesehen.

Der erfindungsgemäße Reibungskoeffizient (COF) der beschichteten Deckschicht (A) der Folie beträgt 0,4 bis 1,6, bevorzugt 0,5 bis 1,5 und besonders bevorzugt 0,55 bis 1,2. Üblicherweise sind diese erfindungsgemäßen COF-Werte in Kombination mit der Verwendung der beschriebenen Partikel in der Deckschicht (A) nicht zu erreichen, weil eine matte Folie aufgrund der Partikel in der Oberfläche gute Gleiteigenschaften, d.h. niedrige COF-Werte aufweist.

Durch die Auftragung der erfindungsgemäßen Beschichtung auf die Deckschicht (A) werden die erfindungsgemäßen COF-Werte und der erfindungsgemäße Glanz der Deckschicht (A) erreicht.

Die Volumentrübung der erfindungsgemäßen Folie ist kleiner 40 %, bevorzugt kleiner 35 % und besonders bevorzugt kleiner 30 %. Erreicht wird eine solche Volumentrübung durch die Verwendung der erfindungsgemäßen Polymere, bevorzugt die Verwendung eines Polymeren enthaltend 4 - 30 Mol-% Isophthalsäure.

Die erfindungsgemäße Trübung wird durch die Auswahl der Partikel und dem Partikelgehalt inkl. der Verteilung der Partikel über die Schichten, sowie durch die geeigneten Polymere und das unten beschriebene Herstellverfahren erreicht.

Die erfindungsgemäße Folie weist weiterhin einen E-Modul in beiden Folienrichtungen von > 3000 N/mm$^2$ und bevorzugt von > 3200 N/mm$^2$ und besonders bevorzugt (in mindestens einer Folienrichtung) von > 3400 N/mm$^2$ auf. Die F5-Werte (Kraft bei 5% Dehnung) liegen bevorzugt bei über 80 N/mm$^2$. Diese mechanischen Eigenschaften können durch Variation der Parameter der biaxialen Streckung der Folie im Rahmen des angegebenen Herstellprozesses eingestellt und erhalten werden. Wird die Folie mit diesen erfindungsgemäßen mechanischen Eigenschaften in die Verpackung verarbeitet, so erhält diese die notwendige Steifigkeit, die beispielsweise für große Tierfutterbeutel notwendig ist.

Erfindungsgemäß tritt bei Temperaturen von >=180°C, bevorzugt >= 190°C und besonders bevorzugt bei >= 210°C keine FIN-Siegelung auf (unter Fin-Siegelung versteht man typischerweise die Siegelung gegen sich selbst, d.h. die Siegelung der beschichteten Deckschicht (A) gegen die beschichtete Deckschicht (A)). Die Folie darf bei den angegebenen Temperaturen eine Siegelnahtfestigkeit von 0,5 N /15 mm nicht überschreiten, d.h. nicht siegeln. Diese Eigenschaft kann eingestellt werden, indem die erfindungsgemäße polymere Zusammensetzung der Deckschicht (A), sowie die erfindungsgemäßen Beschichtungsdicken eingehalten werden.

**Verfahren zur Herstellung**

Die Polyesterpolymere der einzelnen Schichten werden durch Polykondensation hergestellt, entweder ausgehend von Dicarbonsäuren und Diol oder auch ausgehend von den Estern der Dicarbonsäuren, vorzugweise den Dimethylestern, und Diol. Verwendbare Polyester haben bevorzugt SV-Werte im Bereich von 500 bis 1300, wobei die einzelnen Werte weniger wichtig sind, aber der mittlere SV-Wert der eingesetzten Rohstoffe größer als 700 sein sollte und bevorzugt größer als 750 ist.

Die Partikel können bereits bei der Herstellung des Polyesters zugegeben werden. Hierzu werden die Partikel im Diol dispergiert, gegebenenfalls gemahlen, dekantiert oder/und filtriert und dem Reaktor, entweder im (Um)-Esterungs- oder Polykondensationsschritt zugegeben. Bevorzugt kann ein konzentriertes, partikelhaltiges oder additivhaltiges Polyester-Masterbatch mit einem Zweischneckenextruder hergestellt werden und bei der Folienextrusion mit partikelfreiem Polyester verdünnt werden. Es hat sich dabei als günstig erwiesen, wenn keine Masterbatche eingesetzt werden, die weniger als 30 Gew.% Polyester enthalten. Insbesondere das SiO$_2$-Partikel enthaltende Masterbatch sollte nicht mehr als 20 Gew.%-ig an SiO$_2$ sein (wg. der Gefahr der Gelbildung). Eine weitere Möglichkeit besteht darin, Partikel und Additive direkt bei der Folienextrusion in einem Zweischneckenextruder zuzugeben.

Wenn Einschneckenextruder verwendet werden, dann hat es sich als vorteilhaft erwiesen die Polyester vorher zu trocknen. Bei Verwendung eines Zweischneckenextruders mit Entgasungszone kann auf den Trocknungsschritt verzichtet werden.

Zunächst wird der Polyester der einzelnen Schichten in Extrudern komprimiert und verflüssigt. Dann wird/werden die Schmelze/Schmelzen in einer Ein- bzw. Mehrschichtdüse zu flachen Schmelzefilmen ausgeformt, durch eine Breitschlitzdüse gepresst und auf einer Kühlwalze und einer oder mehreren Abzugswalzen abgezogen, wobei sie abkühlt und sich verfestigt.

Die erfindungsgemäße Folie wird biaxial orientiert, d.h. biaxial gestreckt. Die biaxiale Verstreckung der Folie wird am häufigsten sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 135°C (Aufheiztemperaturen 80 bis 135°C) und in Querrichtung in einem Temperaturbereich von 90°C (Beginn der Streckung) bis 140°C (Ende der Streckung) durchgeführt. Das Längsstreckverhältnis liegt im Bereich von 2,5:1 bis 4,5:1, bevorzugt von 2,8:1 bis 4,3:1. Ein Streckverhältnis oberhalb von 4,5:1 führt zu einer deutlich verschlechterten Herstellbarkeit (Abrisse). Das Querstreckverhältnis liegt allgemein im Bereich von 2,5:1 bis 4,8:1, bevorzugt von 3,2:1 bis 4,0:1. Ein höheres Querstreckverhältnis als 4,8:1 führt zu einer deutlich verschlechterten Herstellbarkeit (Abrisse) und sollte daher bevorzugt vermieden werden. Zum Erreichen der gewünschten Folieneigenschaften hat es sich als vorteilhaft erwiesen, wenn die Strecktemperatur (in MD und TD) unter 135°C und bevorzugt unter 130°C liegt. Vor der Querstreckung können eine oder beide Oberfläche(n) der Folie beschichtet werden. In einer Ausführungsform ist die Folie auf beiden Seiten beschichtet, dies führt jedoch zu einer unerwünschten Kostensteigerung. In einer bevorzugten Form ist die Folie einseitig auf der matten Oberfläche mit einer Beschichtung zur Erhöhung des Reibungskoeffizienten (PUbasierte Beschichtung) beschichtet.

In einer Ausführungsform wird diese Polyurethan (PU)-basierte Beschichtungsdispersion In-Line beim Herstellungsprozess der biaxial orientierten Polyesterfolie aufgebracht. Dabei erfolgt der Antrag der Beschichtung einseitig oder beidseitig nach der Längs- und vor der Querstreckung. Um eine gute Benetzung der Polyesterfolie mit der wässrig basierten Beschichtung zu erzielen, wird die Folienoberfläche bevorzugt zunächst coronabehandelt. Die Beschichtung kann mit einem gängigen, geeigneten Verfahren wie mit einem Schlitzgießer oder einem Sprühverfahren aufgetragen werden. Besonders bevorzugt ist die Aufbringung der Beschichtung mittels des "Reverse gravure-roll coating"-Verfahrens, bei dem sich die Beschichtung äußerst homogen auftragen lässt. Ebenfalls bevorzugt ist die Auftragung durch das Meyer-Rod-Verfahren, mit dem sich größere Beschichtungsstärken erzielen lassen. Die Beschichtungskomponenten können während der Trocknung und Verstreckung der Polyesterfolie und besonders bei der anschließenden Wärmebehandlung, die bis zu 240°C erreichen kann, trocknen.

Das In-Line-Verfahren ist hierbei wirtschaftlich attraktiv, da die Beschichtung(en) im Rahmen des Folienherstellungsprozesses aufgetragen werden kann/können, so dass ein zusätzlicher Beschichtungs-Prozessschritt (z.B. Off-Line Verfahren) eingespart werden kann.

Bei der nachfolgenden Thermofixierung wird die Folie über eine Zeitdauer von etwa 0,1 bis 10 s unter Spannung bei einer Temperatur von 150 bis 250°C gehalten und zum Erreichen der bevorzugten Schrumpf- und Längungswerte um mindestens 1 %, bevorzugt mindestens 3 % und besonders bevorzugt mindestens 4 % in Querrichtung relaxiert. Diese Relaxation findet bevorzugt in einem Temperaturbereich von 150 bis 190°C statt. Zur Reduktion des Transparenzbows liegt die Temperatur im ersten Fixierfeld bevorzugt unter 230°C und besonders bevorzugt unter 220°C. Zudem sollten vorzugsweise aus dem gleichen Grund mindestens 1 % bevorzugt mindestens 2 % des Gesamtquerstreckverhältnisses im ersten Fixierfeld liegen, in dem üblicherweise nicht mehr gestreckt wird. Anschließend wird die Folie in üblicher Weise aufgewickelt.

Bei einer besonders wirtschaftlichen Herstellungsweise der Polyesterfolie kann das Verschnittmaterial (Regenerat) in einer Menge von bis zu 60 Gew.%, bezogen auf das Gesamtgewicht der Folie, der Extrusion zur Bildung der Basisschicht (B) zugeführt werden, ohne dass dabei die physikalischen Eigenschaften der Folie nennenswert negativ beeinflusst werden.

Die erfindungsgemäße Folie eignet sich hervorragend zur Herstellung von Folienbeuteln. Insbesondere von großen stapelbaren Tierfutterbeuteln. Die erfindungsgemäße Folie wird hierbei üblicherweise auf der, der matten Seite gegenüberliegenden Seite bedruckt. Dann mittels handelsüblicher Kaschierkleber entweder mit einer Aluminiumfolie (üblicherweise 7 - 12 $\mu$m dick) oder mit einer metallisierten Polyesterfolie (üblicherweise 12 $\mu$m dick) verklebt und abschließend wird eine Siegelfolie auf die Aluminiumfolie (oder die metallisierte PET Folie) aufkaschiert. Die Siegelfolie ist üblicherweise eine Polyethylenfolie (üblicherweise 30 - 140 $\mu$m dick). Aus diesem Laminat werden dann die Wandungen des Beutels ausgestanzt und mittels Kontaktsiegelbacken zu den Beuteln versiegelt, wobei das Polyethylen mit dem Polyethylen einer anderen Beutelwandseite versiegelt.

**Methoden**

Zur Charakterisierung der Folien wurden die folgenden Messwerte benutzt:

*Mittlere Dicke Folie*

Die mittlere Dicke $d_F$ wird bei bekannter Länge, Breite und Dichte einer Folie aus deren Gewicht bestimmt. Gemessen wird das Gewicht eines Folienstreifens mit einer Breite von 80 mm über die gesamte Breite der Maschinenrolle (Folienstreifenlänge). Die einzelnen Probestreifen werden nach dem Zuschneiden auf einer Analysenwaage der Fa. Mettler PM 200 (Höchstlast 200 g) gewogen. Die Berechnung von $d_F$ erfolgt nach der Formel

$$d_F[\mu m] = \frac{m[g]}{l[mm] \cdot b[mm] \cdot d[g/cm^3]} \cdot 10^{-6}$$

 wobei gilt:

$m$    Masse des untersuchten Folienstückes

$l$    Länge der Probe

*b*    Breite der Probe

*d*    Dichte des untersuchten Materials (für Polyester z.B. 1,395 g/cm$^3$)

Die Berechnung der einzelnen Folienschichtdicken (Deckschicht(en) und Basisschicht) erfolgt auf Basis der mittleren Foliendicke $d_F$ unter Berücksichtigung der prozentualen Anteile der Extruderdurchsatzverhältnisse zum Gesamtdurchsatz nach folgenden Formeln:

$$x_A = \frac{D_A \left[\frac{kg}{h}\right] \cdot 100}{D_{Ges}\,[kg/h]}$$

$$d_A[\mu m] = \frac{d_F[\mu m].x_A}{100}$$

$x_A$: prozentualer Anteil der Deckschicht A

$D_A$: Extruderdurchsatz Deckschicht A [kg/h]

$D_{Ges}$: Gesamtextruderdurchsatz [kg/h]

$d_F$: mittlere Foliendicke [$\mu$m]

**Dichte**

Die Dichte der Folie wurde nach ASTM D1505-68, Methode C, bestimmt.

**Mechanische Eigenschaften**

Die mechanischen Eigenschaften in Längs- und Querrichtung werden über Zugprüfung gemäß DIN EN ISO 572-1 und -3 (Probekörper Typ 2) an 100 mm x 15 mm großen Folienstreifen bestimmt. Die Längenänderung wird über einen Traversenwegaufnehmer gemessen. Der E-Modul wird bei einer Zuggeschwindigkeit von 1 mm/min als Steigung zwischen 0,2 % und 0,3 % Dehnung bestimmt. Der 65-Wert (=F5-Wert, Kraft bei 5 % Dehnung) wird mit einer Zuggeschwindigkeit von 100 mm/min gemessen.

**Messung des mittleren Partikel-Durchmessers $d_{50}$ anorganische Partikel**

Die Bestimmung des mittleren Durchmessers $d_{50}$ wird mittels Malvern Master Sizer 2000 am einzusetzenden Partikel durchgeführt.
Die Proben werden dazu in eine Küvette mit Wasser gegeben und diese dann in das Messgerät gestellt. Mittels Laser wird die Dispersion analysiert und aus dem Signal durch Vergleich mit einer Eichkurve die Partikelgrößenverteilung bestimmt. Die Partikelgrößenverteilung ist durch zwei Parameter gekennzeichnet, dem Medianwert $d_{50}$ (= Lagemaß für den Mittelwert) und dem Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse den gewünschten $d_{50}$-Wert.
Messungen an der mittels dieser Partikel hergestellten Folie ergeben einen um 15 - 25 % niedrigeren $d_{50}$ Wert als die eingesetzten Partikel.

**Messung der Teilchengröße der Beschichtungsdispersion**

Die Partikelgröße in der Beschichtungsdispersion wird mittels Laser Korrelation Spektroskopie (LCS) mit einem Coulter N4 Plus bei einer Temperatur von 25°C und einem Winkel von 90° gemessen.

*Reibung*

Die Reibung wurde in Anlehnung an DIN 53375 allerdings unter Verwendung eines 25g Gewichts bestimmt. Der erhaltene Wert wird mit dem Faktor 8 multipliziert. Die Reibung wurde mindestens 14 Tage nach der Produktion gemessen. Ein Verblocken findet statt, wenn in der graphischen Aufzeichnung der Reibkraft-Weg-Verlauf-Messung Unstetigkeitsstellen auftreten.

*Trübung, Transparenz*

Die Prüfung dient zur Bestimmung der Trübung, Transparenz von Kunststoff-Folien, bei denen die optische Klarheit bzw. Trübung für den Gebrauchswert wesentlich ist. Die Messung erfolgt an dem haze-gard plus C der Fa. BYK Gardner nach ASTM D 1003-07.

*Volumentrübung*

Für die Messung der Volumentrübung wird eine Folienprobe in einen Rahmen eingespannt, der in eine Küvette mit Immersionsflüssigkeit getaucht wird. Die Folienprobe muss von beiden Seiten vollständig mit Flüssigkeit benetzt sein. Die Immersionsflüssigkeit sollte einen Brechungsindex zwischen 1,50 und 1,65 aufweisen, verwendet wurde z.B. ein Immersionsöl der Firma Merck, Deutschland (Nr. 104699) mit einem Brechungsindex von 1,516. Die Küvette mit der Folienprobe wird in den Strahlengang eines Trübungsmessgeräts, z.B. Hazegard Hazemeter XL-221 der Firma BYK Gardner, gebracht. Der Trübungswert wird gemessen und davon der Wert der flüssigkeitsgefüllten Küvette ohne Folienprobe als Nullwert abgezogen. Der resultierende Wert ist gleich dem Volumentrübungswert.

*Glanz 60°*

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos.

*Beschichtungsdicke*

Die Beschichtungsdicke d wird über den Verbrauch der Beschichtungslösung pro Zeiteinheit unter Hinzunahme des Streckfaktors quer zur Folienlaufrichtung und der beschichteten Bahnbreite berechnet.

$$d = \frac{A_{nass} \cdot Solid(wt.-\%)}{\rho \cdot TD}$$

| | |
|---|---|
| $A_{nass}$ | = Nassantrag in g/m$^2$ |
| $Solid$(wt.-%) | = Fesstoffgehalt in Gew.-% |
| $\rho$ | = Dichte in g/m$^3$ |
| $TD$ | = Faktor der Breitstreckung |

*Siegelung gegenüber sich selbst (= FIN-Siegelung)*

Zur Bestimmung der Siegelung gegenüber sich selbst werden zwei 15 mm breite Folienstreifen mit der matten, beschichteten Seite übereinandergelegt und bei 180°C, einer Siegelzeit von 0,5 s und einem Siegeldruck von 3 bar (Gerät: Brugger Typ NDS, einseitig beheizte Siegelbacke) versiegelt. Die Siegelnahtfestigkeit wird nach der T-Peel-Methode bestimmt = 2 · 90°. Die Folienstreifen dürfen bei den angegebenen Bedingungen eine Siegelnahtfestigkeit von 0,5 N /15 mm nicht überschreiten, d.h. nicht siegeln.

*Farberscheinungsbild*

Das Farberscheinungsbild wird nach einer internen Methode geprüft, indem ein Folienmuster der Größe A4 mit Acryl-Sprühlack, z.B. Capalac Discolor der Firma Caparol Farben Lacke Bautenschutz GmbH, auf der Deckschicht C auf einem Streifen von 10 cm flächendeckend eingefärbt wird. Nach Trocknen der Farbe wird das Farberscheinungsbild des Musters mit der auf die gleiche Weise eingefärbte Referenzfolie (BOPET Folie Hostaphan® MPK12) durch eine Person visuell verglichen und in folgender Abstufung bewertet:

- Farben wirken genauso klar und lebhaft wie die Referenz => analog Referenz
- Farben wirken grauer/trüber als die Referenz in folgender Abstufung: etwas trüber, sehr viel trüber

**Beispiele**

Beispiel 1-6 und VB1-7

Die Polymermischungen werden bei 292°C aufgeschmolzen und durch eine Breitschlitzdüse auf eine auf 30°C temperierte Kühlwalze elektrostatisch angelegt. Anschließend wird sie bei folgenden Bedingungen längs- und dann quergestreckt:

| Längsstreckung | Aufheiztemperatur | 70-115 | °C |
|---|---|---|---|
| | Strecktemperatur | 115 | °C |
| | Längsstreckverhältnis | 4,0 | |
| Querstreckung | Aufheiztemperatur | 105 | °C |
| | Strecktemperatur | 115 | °C |
| | Querstreckverhältnis (inklusive Streckung 1.Fixierfeld) | 4,0 | |
| Fixierung | Temperatur | 237 - 150 | °C |
| | Dauer | 4 | s |

In den Beispielen (erfindungsgemäß) kommen die folgenden Rohstoffe zum Einsatz:

PET1 = Polyethylenterephthalatrohstoff aus Ethylenglykol und Terephthalsäure mit einem SV Wert von 820.

PET2 = Polyethylenterephthalatrohstoff aus Ethylenglykol und Terephthalsäure mit einem SV Wert von 800 und 12 Mol-% Isophthalsäure (bzgl. der Dicarbonsäure-Einheiten) als Comonomer.

PET3 = Polyethylenterephthalatrohstoff aus Ethylenglykol und Terephthalsäure mit einem SV Wert von 450. Der Rohstoff enthält 15,0 Gew.% Siliziumdioxid Sylobloc 43 vom Hersteller Grace Talent/Technology/Trust, mit einem mittleren Partikeldurchmesser $d_{50}$ von 3,6-4,2 $\mu$m und 12 Mol-% Isophthalsäure als Comonomer (bzgl. der Dicarbonsäure-Einheiten).

PET4 = Polyethylenterephthalatrohstoff aus Ethylenglykol und Terephthalsäure mit einem SV Wert von 790. Der Rohstoff enthält 1,5 Gew.% Siliziumdioxid Sylobloc 46 vom Hersteller Grace, mit einem mittleren Partikeldurchmesser $d_{50}$ von 2,9 - 3,5 $\mu$m.

PET5 = Polyethylenterephthalatrohstoff aus Ethylenglykol und Terephthalsäure mit einem SV Wert von 450. Der Rohstoff enthält 15,0 Gew.% Siliziumdioxid Sylobloc 43 vom Hersteller Grace Talent/Technology/Trust, mit einem mittleren Partikeldurchmesser $d_{50}$ von 3,6-4,2 .

PET6 = Polyethylenterephthalatrohstoff aus Ethylenglykol und Terephthalsäure mit einem SV Wert von 800 und 34 Mol-% Isophthalsäure als Comonomer (bzgl. der Dicarbonsäure-Einheiten).

PET7 = Polyethylenterephthalatrohstoff aus Ethylenglykol und Terephthalsäure mit einem SV Wert von 450. Der Rohstoff enthält 15,0 Gew.% Siliziumdioxid Sylobloc 43 vom Hersteller Grace Talent/Technology/Trust, mit einem mittleren Partikeldurchmesser $d_{50}$ von 3,6-4,2 $\mu$m und 34 Mol-% Isophthalsäure als Comonomer (bzgl. der Dicarbonsäure-Einheiten).

Entsprechend der Angaben in Tabelle 1 wurde die Folie mit einer PU-Beschichtung Esacote PU900 der Firma Lamberti S.p.A. nach dem oben beschriebenen Verfahren beschichtet.

Die nachfolgende Tabelle 1 fasst die Rezepturen und resultierende Folieneigenschaften zusammen:

## Tabelle 1

| | | Beispiel 1 | Beispiel 2 | Beispiel 3 | Beispiel 4 | Beispiel 5 | VB1 | VB2 | VB3 | VB4 | VB5 | VB6 |
|---|---|---|---|---|---|---|---|---|---|---|---|---|
| Schicht | Gesamtfoliendicke | 12 | 12 | 12 | 12 | 12 | 12 | 12 | 12 | 12 | 12 | 12 |
| | Dicke A | 1,2 | 1,2 | 1,2 | 1,2 | 1,2 | 1,2 | 1,2 | 2,5 | 1,2 | 1,2 | 0,5 |
| | Dicke B | 9,6 | 9,6 | 9,6 | 9,6 | 9,6 | 9,6 | 9,6 | 8,3 | 9,6 | 9,6 | 10,3 |
| | Dicke C | 1,2 | 1,2 | 1,2 | 1,2 | 1,2 | 1,2 | 1,2 | 1,2 | 1,2 | 1,2 | 1,2 |
| Beschichtung | Beschichtungsdicke [nm] | 90 | 30 | 230 | 90 | 90 | 0 | 0 | 89 | 589 | 90 | 92 |
| | Feststoffanteil PU-Komponente der Beschichtungsdispersion | 15 | 5 | 30 | 15 | 15 | Keine Beschichtung | Keine Beschichtung | 15 | 30 | 15 | 15 |
| | Feststoffanteil Vernetzer bezogen auf den Feststoffgehalt der Dispersion | 0 | 0 | 0 | 0 | 0,15 | Kein Vernetzer | Kein Vernetzer | 0 | 0 | 0 | 0 |
| A-Schicht | PET 1 [%] | | | | 65 | | | 98 | | | | |
| | PET 2 [%] | 65 | 65 | 65 | | 65 | 65 | | 65 | 65 | | 65 |
| | PET 3 [%] | 35 | 35 | 35 | | 35 | 35 | | 35 | 35 | | 35 |
| | PET 4 [%] | | | | | | | 2 | | | | |
| | PET 5 [%] | | | | 35 | | | | | | | |
| | PET 6 [%] | | | | | | | | | | 65 | |

| | | Beispiel 1 | Beispiel 2 | Beispiel 3 | Beispiel 4 | Beispiel 5 | VB1 | VB2 | VB3 | VB4 | VB5 | VB6 |
|---|---|---|---|---|---|---|---|---|---|---|---|---|
| B-Schicht | PET 7 [%] | | | | | | | | | | 35 | |
| | PET 1 [%] | 50 | 50 | 50 | 50 | 50 | 50 | 50 | 50 | 50 | 50 | 50 |
| | PET 2 [%] | | | | | | | | | | | |
| | PET 3 [%] | | | | | | | | | | | |
| | PET 4 [%] | | | | | | | | | | | |
| | PET 5 [%] | | | | | | | | | | | |
| | PET 6 [%] | | | | | | | | | | | |
| | PET 7 [%] | | | | | | | | | | | |
| | Eigenregenerat [%] | 50 | 50 | 50 | 50 | 50 | 50 | 50 | 50 | 50 | 50 | 50 |
| C-Schicht | PET 1 [%] | 95 | 95 | 95 | 95 | 95 | 95 | 86 | 95 | 95 | 95 | 95 |
| | PET 2 [%] | | | | | | | | | | | |
| | PET 3 [%] | | | | | | | | | | | |
| | PET 4 [%] | 5 | 5 | 5 | 5 | 5 | 5 | 14 | 5 | 5 | 5 | 5 |
| | PET 5 [%] | | | | | | | | | | | |
| | PET 6 [%] | | | | | | | | | | | |
| | PET 7 [%] | | | | | | | | | | | |
| C-Schicht Glanz gemessen unter 60° | | 35 | 43 | 17 | 47 | 36 | 45 | 174 | 20 | 15 | 33 | 54 |
| Transparenz (Bahnmitte) in % | | 91,5 | 91 | 91,8 | 89,9 | 91,6 | 91,4 | 92,2 | 89,1 | 93,9 | 92,1 | 91,8 |

14

| | | Beispiel 1 | Beispiel 2 | Beispiel 3 | Beispiel 4 | Beispiel 5 | VB1 | VB2 | VB3 | VB4 | VB5 | VB6 |
|---|---|---|---|---|---|---|---|---|---|---|---|---|
| Trübung | | 41 | 39 | 48 | 42 | 42 | 38 | 1,6 | 65 | 62 | 41 | 27 |
| COF statisch Seite A/Seite A | | 0,80 | 0,45 | 1,50 | 0,42 | 0,65 | 0,31 | Unstetigkeiten im Verlauf der Messung COF >> 1,6 | 0,55 | Unstetigkeiten im Verlauf der Messung | 0,78 | 0,95 |
| Volumen-trübung | in % | 6,2 | 5,8 | 6,9 | 26,7 | 6,8 | 5,1 | 1,5 | 14,7 | 8,4 | 1,2 | 3,5 |
| E-Modul MD | N/mm2 | 4098 | 4126 | 4189 | 4156 | 4135 | 4125 | 4119 | 4089 | 4168 | 4137 | 4156 |
| E-Modul TD | N/mm2 | 4921 | 5069 | 4907 | 4924 | 4886 | 4957 | 4945 | 5021 | 4978 | 4956 | 4957 |
| F5 MD | N/mm2 | 98 | 97 | 98 | 98 | 99 | 98 | 107 | 100 | 99 | 98 | 105 |
| F5 TD | N/mm2 | 99 | 95 | 98 | 97 | 96 | 97 | 98 | 97 | 97 | 99 | 99 |
| Verarbeitbarkeit | | gut | gut | gut | gut | gut | gut | Folie neigt zu Verblocken auf Maschinen-teilen bei der nachfolgenden Verarbeitung | gut | Folie bleibt auf Maschinen-teilen bei der nachfolgenden Verarbeitung haften | Folie bleibt auf Maschinen-teilen bei der nachfolgenden Verarbeitung haften | gut |
| Selbstsiege-lung Seite A/Seite A bei 180°C Siegeltempe-ratur, 0,5s | | nein | nein | nein | nein | nein | nein | nein | nein | ja | ja | nein |

|  |  | Beispiel 1 | Beispiel 2 | Beispiel 3 | Beispiel 4 | Beispiel 5 | VB1 | VB2 | VB3 | VB4 | VB5 | VB6 |
|---|---|---|---|---|---|---|---|---|---|---|---|---|
| Siegelzeit |  |  |  |  |  |  |  |  |  |  |  |  |
| Farber-schei-nungsbild |  | analog Referenz | analog Referenz | etwas trüber als Referenz | Sehr viel trüber als die Referenz | analog Referenz | Referenz | klarer als Referenz | sehr viel trüber als die Referenz | sehr viel trüber als die Referenz | klarer als Referenz | analog Referenz |
| Bewertung |  | Sehr gute Erhöhung des COF bei niedrigem Folien-glanz | leichte Erhöhung des COF bei mittlerem Folien-glanz | COF Erhöhung sehr gut, Farber-schei-nungsbild etwas schlechter als Bsp.1 | COF Erhöhung sehr gut, Farber-schei-nungsbild etwas schlechter als Bsp.1 | gute Erhöhung des COF bei niedrigem Folien-glanz | COF zu niedrig | Folie zu glänzend | Farberschei-nungsbild nicht gut | Farberschei-nungsbild nicht gut, schlechte FIN-Siegelung | schlechte FIN-Siegelung | Glanz zu hoch |

**Patentansprüche**

1. Mindestens zweischichtige, biaxial orientierte Polyesterfolie, die auf mindestens einer Folienoberfläche (=Deckschicht A) mit einer Polyurethanbasierten Beschichtung ausgestattet ist, **dadurch gekennzeichnet, dass**

   (a) die Gesamtfoliendicke 8 - 75 $\mu$m beträgt,
   (b) eine Deckschicht (=Deckschicht A) Partikel mit einem $d_{50}$ von 2,0 $\mu$m - 10 $\mu$m enthält, wobei diese Deckschicht (A) dann eine matte Deckschicht (A) ist,
   (c) die Polyurethan-basierte Beschichtung das Trocknungsprodukt einer wässrigen Dispersion darstellt, wobei:
   (d) die wässrige Beschichtungsdispersion auf die matte Deckschicht (A) aufgetragen wird,
   (e) die wässrige Beschichtungsdispersion sphärische Teilchen mit einer mittleren Teilchengröße von $\geq$ 0,6 $\mu$m enthält,
   (f) die Trockenschichtdicke der Beschichtung 20 nm - 250 nm beträgt.

2. Mindestens zweischichtige, biaxial orientierte Polyesterfolie, **dadurch gekennzeichnet, dass**

   a) mindestens eine der beiden Oberflächen (=Deckschicht A) der Folie einen Glanz bei 60° von maximal 50 und minimal 10, und
   b) diese Deckschicht A einen Reibungskoeffizienten (COF) von 0,4 - 1,6 sowie
   c) bei Kontakt mit sich selbst (matt auf matt) bis mindestens 180°C nicht siegelt, und die Folie
   d) eine Trübung von kleiner 60 %,
   e) eine Volumentrübung von kleiner 40 %,
   f) einen E-Modul von größer 3000 N/mm$^2$, und
   g) einen F5-Wert von größer 80 N/mm$^2$ aufweist.

3. Polyesterfolie nach Anspruch 1 oder 2, **dadurch gekennzeichnet, dass** die Polyurethan-Beschichtung sphärische Teilchen mit einer mittleren Teilchengröße von $\geq$ 0,6 $\mu$m enthalten, wobei diese Teilchen mindestens ein anionisches Polyurethan enthalten.

4. Polyesterfolie nach Anspruch 3, **dadurch gekennzeichnet, dass** das anionische Polyurethan der Teilchen durch die Reaktion mindestens eines

   (1a) anionischen Prepolymers mit einem 5 - 25 mval/100 g (=meq./100g) Trockenanteil von Carboxylgruppen mit mindestens einem
   (1b) Kettenverlängerer, der aus Diaminsulfonatsalzen mit einer oder mehreren Sulfonsäuregruppen gewählt wurde,
   gebildet wird.

5. Folie nach einem der Ansprüche 1-4, wobei die Polyurethan-basierte Beschichtungsdispersion zusätzlich einen Vernetzer mit einem Anteil von $\leq$ 2,0 Gew.% enthält.

6. Folie nach Anspruch 5, wobei der der Vernetzer Oxazolin-basiert, oder Silanbasiert ist.

7. Folie nach einem der vorhergehenden Ansprüche, wobei die matte Deckschicht (A) Siliziumdioxidpartikel in einer Menge von 2 Gew.% bis 7 Gew.% enthält.

8. Folie nach einem der vorhergehenden Ansprüche, wobei die biaxial orientierte Polyesterfolie dreischichtig (A,B,C) aufgebaut ist, wobei diese dreischichtige Folie auf der einen Seite der Schicht (B) (=Basisschicht) die matte Deckschicht (A) und auf der anderen Seite der Schicht (B) die Deckschicht (C) aufweist.

9. Folie gemäß Anspruch 8, wobei die Deckschicht (C) Partikel mit einem Durchmesser d50 von 2,0 - 5 $\mu$m in einer Menge von 500 - 4000 ppm enthält.

10. Folie nach einem der vorhergehenden Ansprüche, wobei die matte Deckschicht (A) eine Dicke von mindestens 0,7 $\mu$m und maximal 2,0 $\mu$m hat.

11. Folie nach einem der vorhergehenden Ansprüche, wobei die matte Deckschicht (A) 4 bis 30 Mol-% Isophthalsäure(IPA)-abgeleitete Einheiten enthält.

**12.** Folie nach einem der vorhergehenden Ansprüche, wobei die Folie bis zu 60 Gew.% recyceltes Polyesterpolymer in der Schicht (B) enthält.

**13.** Verfahren zur Herstellung der mindestens zweischichtigen, biaxial orientierten, Polyesterfolie nach Anspruch 1 oder 2, wobei man den oder die Polyesterrohstoff(e) für die mehrschichtige Polyesterfolie in zwei oder mehreren Extrudern aufschmilzt, durch eine Breitschlitzdüse auf eine Abzugswalze extrudiert, abzieht und dann simultan oder sequenziell längs- und querstreckt, fixiert und dann aufwickelt, wobei auf eine Folienoberfläche eine Polyurethan-basierte Beschichtung aufgetragen wird, die sphärische Teilchen mit einer mittleren Teilchengröße von $\geq 0{,}6\ \mu$m enthält, wobei diese Teilchen mindestens ein anionisches Polyurethan enthalten, dass durch die Reaktion mindestens eines

(1a) anionischen Prepolymers mit einem 5 - 25 mval/100 g (=meq./100g) Trockenanteil von Carboxylgruppen mit mindestens einem
(1b) Kettenverlängerer, der aus Diaminsulfonatsalzen mit einer oder mehreren Sulfonsäuregruppen gewählt wurde,

gebildet wird.

**14.** Verwendung einer Folie nach Anspruch 1 oder 2 in Verpackungen und/oder Beuteln, insbesondere Tierfutterbeutel.

**15.** Verwendung einer Folie nach Anspruch 1 oder 2 zur Herstellung von Beuteln, Schläuchen und/oder Verpackungen die dafür vorgesehen sind mit Lebens- oder Futtermitteln in Berührung zu kommen.

Europäisches
Patentamt

European
Patent Office

Office européen
des brevets

# EUROPÄISCHER RECHERCHENBERICHT

Nummer der Anmeldung

EP 19 17 2925

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 976 548 A2 (MITSUBISHI POLYESTER FILM GMBH [DE]) 2. Februar 2000 (2000-02-02) | 1,2,8,9, 11,12, 14,15 | INV. C08J7/04 B32B27/36 |
| Y | * Absatz [0001] *<br>* Absatz [0015] *<br>* Absatz [0022] *<br>* Absatz [0030] *<br>* Absätze [0035] - [0036] *<br>* Absatz [0037] - Absatz [0040] *<br>* Absätze [0043] - [0045] *<br>* Absatz [0047] *<br>* Absätze [0049] - [0050] *<br>* Absätze [0054] - [0055] *<br>* Absatz [0057]; Tabelle 1 *<br>* Absatz [0067] *<br>* Ansprüche 1,4,7-9 *<br>----- | 3-7,10, 13 | |
| X | WO 01/53091 A1 (MITSUBISHI POLYESTER FILM GMBH [DE]; MURSCHALL URSULA [DE] ET AL.) 26. Juli 2001 (2001-07-26) | 1,2,8,9, 11,12, 14,15 | |
| Y | * Seite 1, Zeile 1 - Zeile 8 *<br>* Seite 4, Zeile 1 - Zeile 15 *<br>* Seite 4, Zeile 25 - Zeile 27 *<br>* Seite 5, Zeile 20 *<br>* Seite 5, Zeile 21 - Zeile 25 *<br>* Seite 10, Zeile 10 - Zeile 15 *<br>* Seite 11, Zeile 4 - Zeile 9 *<br>* Seite 15, Zeile 15 - Zeile 25 *<br>* Seite 16, Zeile 5 - Zeile 11 *<br>* Seite 17, Zeile 15 - Zeile 27 *<br>* Seite 18, Absatz 1 *<br>* Seite 18, letzter Absatz *<br>* Seite 19, Zeile 6 - Zeile 12 *<br>* Seite 20, letzter Absatz *<br>* Seite 21, letzter Zeile - Seite 22, Zeile 1 *<br>* Seite 23; Tabelle 1 *<br>----- <br> -/-- | 3-7,10, 13 | **RECHERCHIERTE SACHGEBIETE (IPC)**<br><br>B32B<br>C08J |

Der vorliegende Recherchenbericht wurde für alle Patentansprüche erstellt

| Recherchenort | Abschlußdatum der Recherche | Prüfer |
|---|---|---|
| München | 9. Oktober 2019 | Schlembach, Sandra |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
    Dokument

EPO FORM 1503 03.82 (P04C03)

Seite 1 von 3

**Europäisches Patentamt**
**European Patent Office**
**Office européen des brevets**

# EUROPÄISCHER RECHERCHENBERICHT

Nummer der Anmeldung

EP 19 17 2925

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2010/015494 A2 (LAMBERTI SPA [IT]; COSTA GABRIELE [IT] ET AL.) 11. Februar 2010 (2010-02-11) * das ganze Dokument * ----- | 3-7,10, 13 | |
| Y | : Terri Dr ET AL: "INHERENT MATTE POLYURETHANE DISPERSIONS AS MATTING AGENTS", , 21. Mai 2014 (2014-05-21), XP055627067, Gefunden im Internet: URL:http://www.abrafati2017.com.br/2015/Dados/PDF/Paper_139.pdf [gefunden am 2019-09-30] * Seiten 1-2 * * das ganze Dokument * * Seite 6 * * Seiten 8-10 * ----- | 3 | |
| Y | Markus Dimmers ET AL: "wässrige Lacksysteme // matte polyurethandispersionen - Für eine glanzlose Zukunft", Farbe und Lack, 1. November 2015 (2015-11-01), Seiten 22-26, XP055628772, Gefunden im Internet: URL:http://www.alberdingk-boley.de/fileadmin/documents/Presseberichte/2015-11_FL_11_2015_Dimmers.pdf [gefunden am 2019-10-04] * das ganze Dokument * ----- -/-- | 3 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 9. Oktober 2019 | Schlembach, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes Dokument

EPO FORM 1503 03.82 (P04C03)

Europäisches Patentamt
European Patent Office
Office européen des brevets

**EUROPÄISCHER RECHERCHENBERICHT**

Nummer der Anmeldung

EP 19 17 2925

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 779 326 A1 (DIAFOIL HOECHST CO LTD [JP]) 18. Juni 1997 (1997-06-18)<br>* Seite 2, letzter Absatz - Seite 3, Absatz 1 *<br>* Seite 3, Zeile 38 - Zeile 44 *<br>* Seite 4, Zeile 1 - Zeile 11 *<br>* Seite 5, Zeile 36 - Zeile 59 *<br>* Seite 6, Absatz 1 *<br>* Seite 6, Zeile 26 - Zeile 31 *<br>* Seite 11, letzter Absatz - Seite 12, Zeile erster *<br>* Ansprüche 1,3,5 *<br>----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 9. Oktober 2019 | Schlembach, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes Dokument

EPO FORM 1503 03.82 (P04C03)

Seite 3 von 3

**ANHANG ZUM EUROPÄISCHEN RECHERCHENBERICHT
ÜBER DIE EUROPÄISCHE PATENTANMELDUNG NR.**

EP 19 17 2925

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-10-2019

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 0976548 | A2 | | 02-02-2000 | DE | 19834603 | A1 | 03-02-2000 |
| | | | | DE | 59912754 | D1 | 15-12-2005 |
| | | | | EP | 0976548 | A2 | 02-02-2000 |
| | | | | JP | 2000052523 | A | 22-02-2000 |
| | | | | KR | 20000012103 | A | 25-02-2000 |
| | | | | US | 6358604 | B1 | 19-03-2002 |
| WO 0153091 | A1 | | 26-07-2001 | DE | 10002178 | A1 | 26-07-2001 |
| | | | | EP | 1268206 | A1 | 02-01-2003 |
| | | | | JP | 2004500259 | A | 08-01-2004 |
| | | | | US | 2003157352 | A1 | 21-08-2003 |
| | | | | WO | 0153091 | A1 | 26-07-2001 |
| WO 2010015494 | A2 | | 11-02-2010 | BR | PI0915779 | A2 | 22-05-2018 |
| | | | | CN | 102112510 | A | 29-06-2011 |
| | | | | DK | 2321361 | T3 | 25-11-2013 |
| | | | | EP | 2321361 | A2 | 18-05-2011 |
| | | | | ES | 2435271 | T3 | 17-12-2013 |
| | | | | HR | P20131042 | T1 | 06-12-2013 |
| | | | | IT | 1391700 | B1 | 17-01-2012 |
| | | | | PT | 2321361 | E | 27-11-2013 |
| | | | | SI | 2321361 | T1 | 29-11-2013 |
| | | | | WO | 2010015494 | A2 | 11-02-2010 |
| EP 0779326 | A1 | | 18-06-1997 | EP | 0779326 | A1 | 18-06-1997 |
| | | | | JP | H082122 | A | 09-01-1996 |
| | | | | JP | 3727033 | B2 | 14-12-2005 |
| | | | | US | 5824394 | A | 20-10-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0678378 A
- EP 1442875 A
- EP 0903221 A
- EP 2321361 A